# EUROPEAN PATENT APPLICATION

(11) **EP 4 614 650 A1**
(43) Date of publication of application: **10.09.2025**
(21) Application number: 23886146.2
(22) Date of filing: 27.10.2023
(51) Int. Cl.: H01M 10/0567, H01M 10/052

(54) **ELECTROLYTE ADDITIVE, AND BATTERY ELECTROLYTE COMPRISING SAME AND SECONDARY BATTERY COMPRISING SAME**

(30) Priority: 02.11.2022 KR 20220144142; 18.07.2023 KR 20230093000
(71) Applicant: Soulbrain Co., Ltd., Seongnam-si, Gyeonggi-do 13486 (KR)
(72) Inventor: KIM, Bang Han, Seongnam-si, Gyeonggi-do 13486 (KR); KANG, Wan Chul, Seongnam-si, Gyeonggi-do 13486 (KR); PARK, Jeong Geun, Seongnam-si, Gyeonggi-do 13486 (KR); KIM, Min Goo, Seongnam-si, Gyeonggi-do 13486 (KR)
(74) Representative: Dehns
(86) International application number: PCT/KR2023/016869
(87) International publication number: WO 2024/096450

(57) **Abstract**

The present invention relates to an electrolyte additive, an electrolyte including the electrolyte additive, and a secondary battery including the electrolyte. According to the present invention, by forming a stable film on the cathode and anode of various lithium secondary batteries including high-nickel, Si-anode, LFP, lithium-manganese-rich (LMR) batteries or cobalt-free batteries, side reactions may be prevented from occurring inside a battery, and charge/discharge resistance may be reduced, thereby improving charging efficiency and output. In addition, even when stored for a long time under high-temperature conditions, the increase in battery resistance may be suppressed, and gas generation due to decomposition of electrolyte components may be significantly suppressed. Thus, long-term lifespan and high-temperature capacity retention may be excellent. In addition, by suppressing the increase in acidity of an electrolyte and inhibiting the elution of transition metal ions from a cathode by effectively scavenging hydrofluoric acid among side reaction products due to the instability of a high-nickel cathode, a secondary battery having excellent battery characteristics and lifespan may be provided.

## Description

### [Technical Field]

The present invention relates to an electrolyte additive, an electrolyte for batteries including the electrolyte additive, and a secondary battery including the electrolyte. More particularly, the present invention relates to an electrolyte additive capable of providing a secondary battery capable of suppressing side reactions inside a battery by forming a stable film on the cathode and anode of various lithium secondary batteries including high-nickel, Si-anode, lithium iron phosphate (LFP), lithium-manganese-rich (LMR) batteries or cobalt-free batteries, improving charging efficiency and output due to low charge/discharge resistance, having long-term lifespan and excellent high-temperature capacity retention by suppressing battery resistance increase and gas generation even when stored for a long time under high-temperature conditions, and having excellent battery characteristics and lifespan by suppressing the increase in acidity of an electrolyte and inhibiting the elution of transition metal ions from a cathode by effectively scavenging hydrofluoric acid among side reaction products due to the instability of a high-nickel cathode.

### [Background Art]

In a lithium secondary battery, an electrolyte between a cathode and an anode enables smooth movement of lithium ions, and use of electric energy is promoted according to a method in which electricity is generated or consumed by oxidation-reduction reaction according to intercalation and desorption at the cathode and anode.

Recently, as interest in the environment increases worldwide, environmental regulations are being strengthened. Accordingly, interest in eco-friendly automobiles that can replace internal combustion engine automobiles, which are one of the main causes of air pollution, is also increasing. Accordingly, domestic and foreign battery industries are actively developing automobile batteries.

To use a battery in an automobile, the output and capacity of the battery must be greatly increased, and problems such as a decrease in output and an increase in resistance at high and low temperatures must be solved in consideration of use environments such as severe weather. In particular, in the case of electric vehicles, research is being conducted to reduce the internal resistance of a battery and increase the remaining capacity in relation to the importance of output and driving distance performance. In particular, it is necessary to develop a battery that suppresses side reactions internal a battery and secures low resistance and long lifespan performance even when stored for a long time under high-temperature conditions.

In addition, it is necessary to develop a battery having excellent charging efficiency and output by suppressing side reactions inside the battery and reducing charge/discharge resistance by forming a stable film on the cathode and anode of various lithium secondary batteries including high-nickel, Si-anode, LFP, lithium-manganese-rich (LMR) batteries or cobalt-free batteries. That is, it is necessary to develop a battery having excellent battery characteristics and lifespan by suppressing the increase in acidity of an electrolyte and inhibiting the elution of transition metal ions from a cathode by effectively scavenging hydrofluoric acid among side reaction products due to the instability of a high-nickel cathode.

### [Related Art Documents]

### [Patent Documents]

US Patent No.11394057

### [Disclosure]

### [Technical Problem]

Therefore, the present invention has been made in view of the above problems, and it is one object of the present invention to provide a novel electrolyte additive for batteries, an electrolyte for batteries including the electrolyte additive, and a secondary battery including the electrolyte.

It is another object of the present invention to provide a secondary battery having improved battery output by suppressing side reactions inside a battery and reducing charge resistance, being capable of long-term storage due to improved recovery capacity at high temperatures, and having excellent lifespan maintenance at high temperatures.

The above and other objects can be accomplished by the present invention described below.

### [Technical Solution]

In accordance with one aspect of the present invention, provided is an electrolyte additive characterized by being a compound represented by Chemical Formula 1 below. 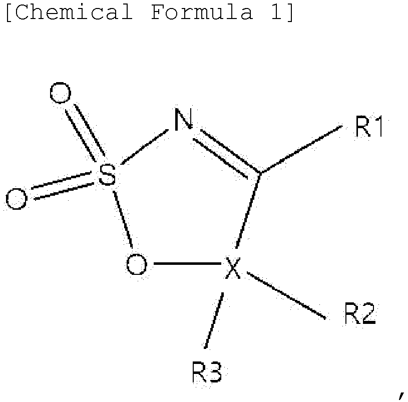 wherein a line represents a bond; unless a separate element is indicated, carbon is located at a point where bonds intersect; X is carbon (C), phosphorus (P), nitrogen (N), oxygen (O), or sulfur (S); R1 is F, Cl, Br, I, a C1-C3 alkyl group, a vinyl group, an allyl group, a propargyl group, a phenyl group, or a carboxyl group; and R2 and R3 are independently H, F, Cl, Br, I, a C1-C3 alkyl group, a vinyl group, an allyl group, a propargyl group, a phenyl group, or a carboxyl group.

The compound represented by Chemical Formula 1 may include compounds represented by Chemical Formulas 1-1 to 1-7 below.

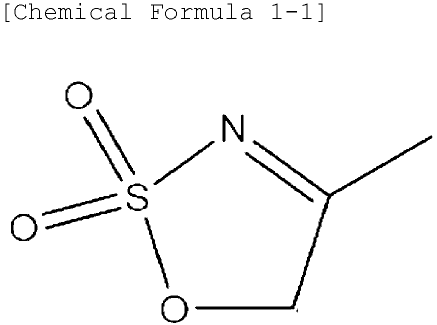

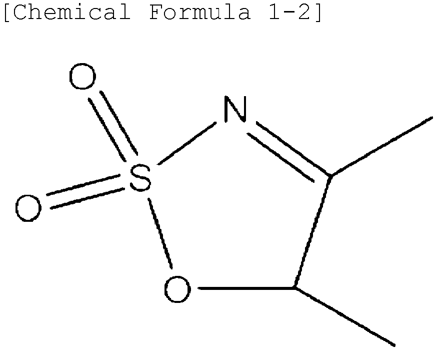

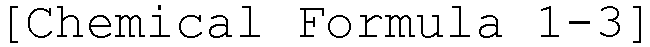

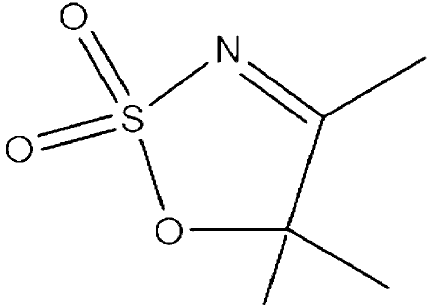

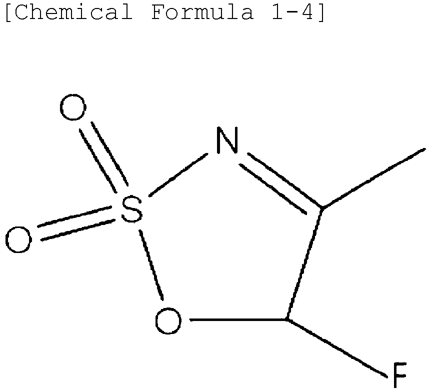

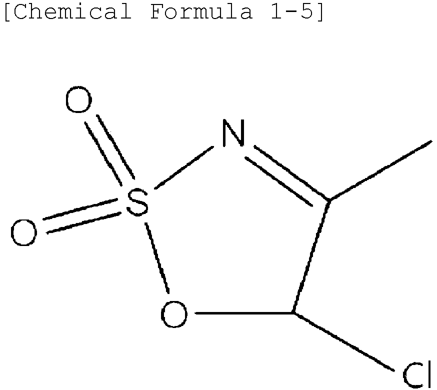

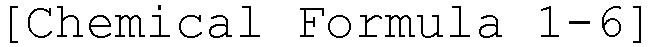

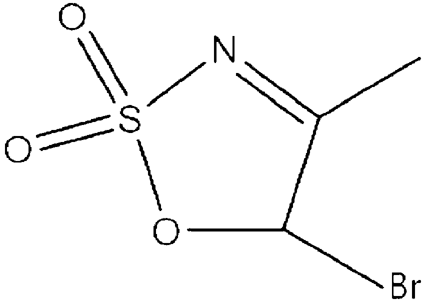

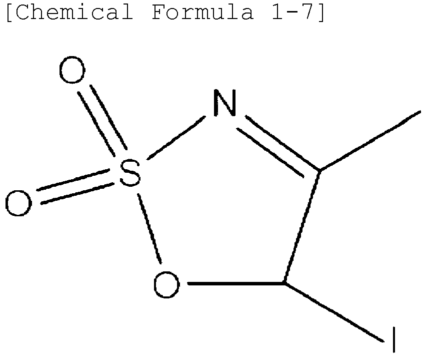

In accordance with another aspect of the present invention, provided is an electrolyte additive including a compound represented by Chemical Formula 1 below; and one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile. 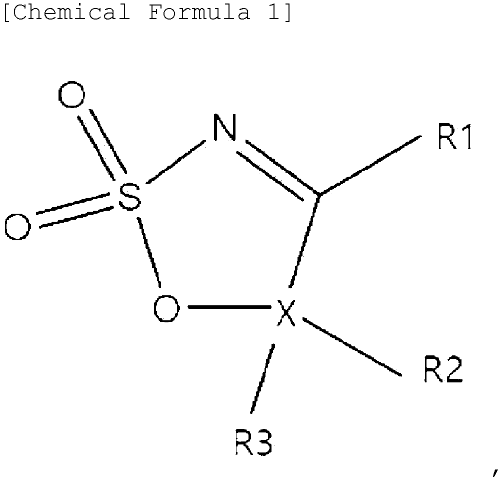 wherein a line represents a bond; unless a separate element is indicated, carbon is located at a point where bonds intersect; X is carbon (C), phosphorus (P), nitrogen (N), oxygen (O), or sulfur (S); R1 is F, Cl, Br, I, a C1-C3 alkyl group, a vinyl group, an allyl group, a propargyl group, a phenyl group, or a carboxyl group; and R2 and R3 are independently H, F, Cl, Br, I, a C1-C3 alkyl group, a vinyl group, an allyl group, a propargyl group, a phenyl group, or a carboxyl group.

For example, based on 100 % by weight of components contained in the electrolyte additive, the compound represented by Chemical Formula 1 may be included in an amount of 0.1 to 10 % by weight, preferably 0.1 to 5 % by weight, more preferably 0.1 to 2.0 % by weight, still more preferably 0.1 to 1.0 % by weight, most preferably 0.2 to 1.0 % by weight.

For example, based on 100 % by weight of components contained in the electrolyte additive, the one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile may be included in an amount of 0.1 to 20 % by weight, as a specific example, 0.2 to 10 % by weight, as a preferred example, 0.5 to 5 % by weight.

For example, the compound represented by Chemical Formula 1; and one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile may be included in a weight ratio of 1:0.5 to 1:3, 1:0.5 to 1:1.5, or 1:0.7 to 1:1.2.

In accordance with still another aspect of the present invention, provided is an electrolyte additive including a compound represented by Chemical Formula 1-1 below; and one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile. 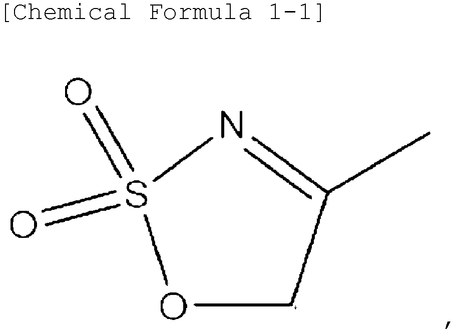 wherein a line represents a bond; unless a separate element is indicated, carbon is located at a point where bonds intersect.

For example, based on 100 % by weight of components contained in the electrolyte additive, the compound represented by Chemical Formula 1-1 may be included in an amount of 0.1 to 10 % by weight, as a specific example, 0.1 to 5 % by weight, as a preferred example, 0.5 to 2 % by weight.

For example, based on 100 % by weight of components contained in the electrolyte additive, the one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile may be included in an amount of 0.1 to 20 % by weight, as a specific example, 0.2 to 10 % by weight, as a preferred example, 0.5 to 5 % by weight.

The compound represented by Chemical Formula 1-1; and the one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile may be included in a weight ratio of 1:0.5 to 1:3.

In accordance with still another aspect of the present invention, provided is an electrolyte including an organic solvent, lithium salt, and an electrolyte additive, wherein the electrolyte additive includes the electrolyte additive described above.

The organic solvent may include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

The lithium salt may include one or more selected from the group consisting of LiPF₆, LiF₄, LiCl, LiBr, LiI, LiClO₄, LiBF4, LiB₁₀Cl₁₀, LiSbF6, LiAsF₆, LiN (SO₂C₂F₅)₂, LiCF₃SO₃, LiCF₃CO₂, Li(CF₃SO₂)₂N, LiN(SO₃C₂F₅)₂, Li(FSO₂)₂N, LiC₄F₉SO₃, LiClO₄, LiAlO₂, LiAlCl₄, LiN(CₓF₂ₓ+1SO₂)(C_{y}F_{2y}+1SO₂) (Here, x and y are natural numbers, e.g., integers from 1 to 20), LiAsF₆, LiSbF₆, LiAlCl₄, LiB(C₂O₄)₂ (lithium bis(oxalato) borate: LiBOB), CH₃SO₃Li, CF₃SO₃Li, and (CF₃SO₂)₂NLi.

Based on 100 % by weight in total of the electrolyte, the electrolyte additive may be included in an amount of 0.1 to 10 % by weight, 1 to 10 % by weight, 3 to 10 % by weight, 1 to 8 % by weight, or 1 to 6 % by weight.

In accordance with yet another aspect of the present invention, provided is a secondary battery including an anode, a cathode, a separation membrane interposed between the anode and the cathode, and an electrolyte, wherein the electrolyte is the electrolyte described above.

The secondary battery may be a battery for automobiles.

The battery for automobiles may be a high-nickel full cell battery, a lithium iron phosphate (LFP) battery, a lithium-manganese-rich (LMR) battery, or a cobalt-free battery.

The high-nickel full cell battery may include lithium composite metal oxide with a nickel content of 80 % or more as a cathode material and may have a basic capacity of 0.1 to 100 Ah.

The lithium iron phosphate (LFP) battery may have a basic capacity of 0.1 to 100 Ah.

The lithium-manganese-rich (LMR) battery may have a basic capacity of 0.1 to 100 Ah.

The cobalt-free batteries may have a basic capacity of 0.1 to 100 Ah.

The secondary battery may have a recovery capacity maintenance rate of 86 % or more, 86.3 % or more, 86 to 95 %, or 86 to 90 % at 60 °C.

The secondary battery may have a lifespan efficiency of 89 % or more, 89.3 % or more, 89 to 99 %, or 89 to 95 % at 60 °C

The secondary battery may have a thickness increase rate of 6 % or less, 5 % or less, 1 to 5 %, or 3 to 5 % at 60 °C

When the secondary battery is a high-nickel full cell battery, the secondary battery may have a resistance increase rate of 20 % or less, 18 % or less, 1 to 20 %, or 3 to 17 % at 60 °C.

When the secondary battery is a lithium iron phosphate battery, the secondary battery may have a resistance increase rate of 100 % or less, 90 % or less, 1 to 90 %, or 3 to 90 % at 60 °C.

### [Advantageous Effects]

The charging efficiency and output of a secondary battery including an electrolyte including an electrolyte additive of the present invention can be improved by suppressing side reactions inside the battery and reducing charge/discharge resistance by forming a stable film on the cathode and anode of various lithium secondary batteries including high-nickel, Si-anode, LFP, lithium-manganese-rich (LMR) batteries or cobalt-free batteries.

In addition, in a secondary battery including an electrolyte including the electrolyte additive of the present invention, even when stored for a long time under high-temperature conditions, the increase in battery resistance can be suppressed, and thus long-term lifespan and high-temperature capacity retention can be excellent. In addition, by suppressing the increase in acidity of an electrolyte and inhibiting the elution of transition metal ions from a cathode by effectively scavenging hydrofluoric acid among side reaction products due to the instability of a high-nickel cathode, a secondary battery having excellent battery characteristics and lifespan can be provided.

### [Best Mode]

Hereinafter, the present invention will be described in detail, but the present invention is not limited thereto.

To manufacture an automobile battery, the present inventors have studied a secondary battery having improved output by suppressing side reactions inside a battery and excellent recovery capacity and lifespan characteristics at high temperatures by suppressing the increase in battery resistance even when stored for a long time under high temperature conditions. While conducting the above research, the present inventors confirmed that all of the above objects were achieved when an additive having a specific structure was added to an electrolyte of a secondary battery. Based on these results, the present inventors conducted further studies to complete the present invention.

An electrolyte additive included in an electrolyte according to embodiments of the present invention includes a compound represented by Chemical Formula 1 below. In this case, side reactions inside a battery may be suppressed, and the charge resistance of a secondary battery may be reduced, thereby improving charging efficiency and output. In addition, even when stored for a long time under high-temperature conditions, the increase in battery resistance may be suppressed, and thus long-term lifespan and high-temperature capacity retention may be excellent. In addition, by suppressing the increase in acidity of an electrolyte and inhibiting the elution of transition metal ions from a cathode by effectively scavenging hydrofluoric acid among side reaction products due to the instability of a high-nickel cathode, battery characteristics and lifespan may be excellent.

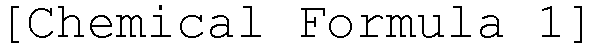

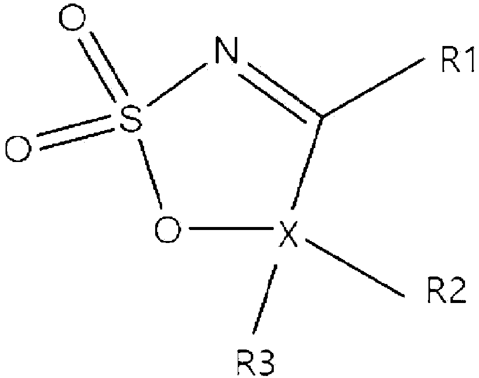

In Chemical Formula 1, a line represents a bond; unless a separate element is indicated, carbon is located at a point where bonds intersect; X is carbon (C), phosphorus (P), nitrogen (N), oxygen (O), or sulfur (S); R1 is F, Cl, Br, I, a C1-C3 alkyl group, a vinyl group, an allyl group, a propargyl group, a phenyl group, or a carboxyl group; and R2 and R3 are independently H, F, Cl, Br, I, a C1-C3 alkyl group, a vinyl group, an allyl group, a propargyl group, a phenyl group, or a carboxyl group.

Specifically, as the results of DFT (density functional theory) calculations for this compound, Compared to ethylene carbonate (EC) which has a HOMO of -12.72 eV and a LUMO of 1.74 eV, the compound has a HOMO of -10.77 eV and a LUMO of 0.85 eV, showing a high HOMO value and a low LUMO value. Based on these results, the compound is predicted to be able to act on both the cathode and the anode, and in fact, a sulfonyl-based film is formed after the middle stage of the reaction together with the initial LiF-based inorganic film component, thereby stabilizing the interface between the electrodes. Specifically, Li₂SO₃, known as a low-resistance component, is effectively generated to achieve electrode stabilization and resistance reduction effects.

It is preferable to use carbon (C), sulfur (S), or nitrogen (N), which has a large difference in electronegativity with oxygen (O) and nitrogen (N), as X to provide the aforementioned effect.

When the electrolyte additive represented by Chemical Formula 1 is added to the electrolyte of a secondary battery, electrons are localized toward the O element, S element, or N element due to the electronegativity difference between the S element and the O element directly connected thereto and the electronegativity difference between the N element and the X element (e.g., C element, S element, or N element). In addition, due to the asymmetric structure of Chemical Formula 1, the S element becomes electron-poor (e- poor, δ+), and an oxidation reaction is induced in the electrolyte containing lithium ions, thereby forming a stable film on an electrode, specifically, a cathode.

Decomposition of the electrolyte may be prevented due to the stability of the film, and thus cycle characteristics may be improved. In particular, compared to conventional electrode films that decompose at high temperatures and have low high-temperature storage properties, the film does not decompose at high temperatures and thus has excellent high-temperature storage properties. In addition, resistance increase may be prevented, and thus charge and discharge efficiency and output may be improved. In addition, the safety of a battery may be improved because gas generation due to chemical reaction inside the battery is suppressed. In addition, structural collapse of the electrode active materials of a cathode and anode may be prevented at high temperatures, thereby improving capacity retention, thereby obtaining the effect of increasing a lifespan. In addition, by suppressing the increase in acidity of an electrolyte and inhibiting the elution of transition metal ions from a cathode by effectively scavenging hydrofluoric acid among side reaction products due to the instability of a high-nickel cathode, battery characteristics and lifespan may be excellent.

When R1 is an C1-C3 alkyl group, side reactions inside a battery may be suppressed, and thus output may be improved. In addition, even when stored for a long time under high-temperature conditions, the increase in battery resistance may be suppressed, and thus a secondary battery having excellent high-temperature recovery capacity and lifespan characteristics may be provided.

For reference, when R1 is hydrogen, the HOMO energy level increases, which may decrease the possibility of electrode film formation of the additive and increase the possibility of decomposition of the electrolyte main solvent. Accordingly, the thickness of the battery may increase, the resistance may increase, and the recovery capacity may decrease when stored at high temperatures.

When R2 and R3 are hydrogen, F, Cl, Br, or I, side reactions inside a battery may be suppressed, and thus output may be improved. In addition, even when stored for a long time under high-temperature conditions, the increase in battery resistance may be suppressed, and thus a secondary battery having excellent high-temperature recovery capacity and lifespan characteristics may be provided.

As a specific example, the electrolyte additive represented by Chemical Formula 1 may be selected from compounds represented by Chemical Formulas 1-1 to 1-7 below.

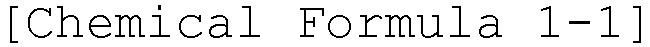

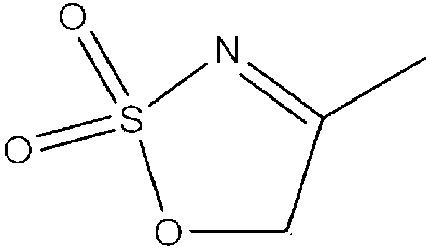

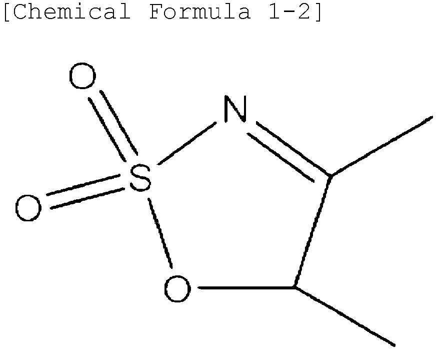

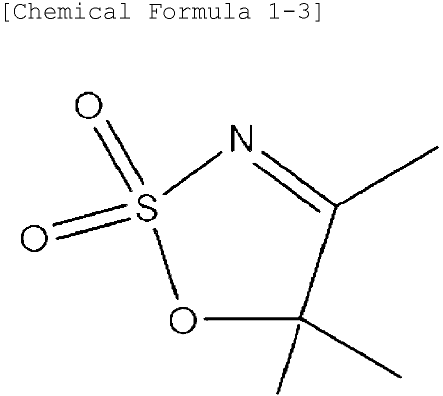

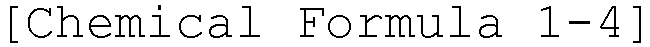

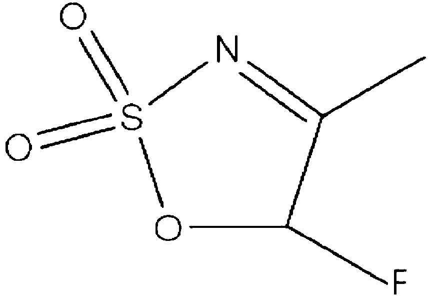

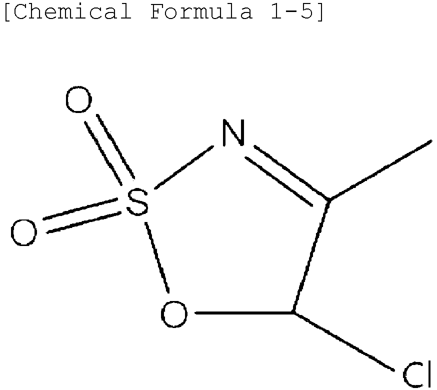

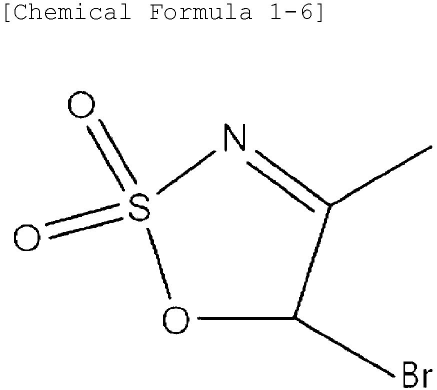

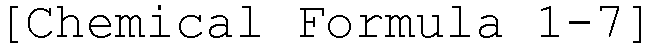

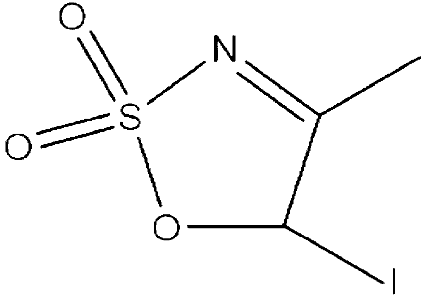

Based on 100 % by weight in total of the electrolyte, the compound represented by Chemical Formula 1 may be included in an amount of 0.1 to 10 % by weight, preferably 0.1 to 5 % by weight, more preferably 0.1 to 2.0 % by weight, still more preferably 0.1 to 1.0 % by weight, most preferably 0.2 to 1.0 % by weight. Within this range, the charging efficiency and high-temperature lifespan of a battery may be excellent.

Preferably, the compound represented by Chemical Formula 1 is introduced simultaneously with one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile. In this case, a desired synergistic effect may be obtained without adversely affecting the components constituting the battery.

Based on 100 % by weight in total of the electrolyte, the one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile may be included in an amount of 0.1 to 20 % by weight, preferably 0.1 to 10 % by weight, more preferably 0.5 to 8.0 % by weight, still more preferably 1 to 4.0 % by weight, most preferably 1.0 to 3.5 % by weight. Within this range, the high-temperature characteristics and cycle characteristics of a battery may be improved.

The compound represented by Chemical Formula 1 and the one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile may be used in a weight ratio of 1:0.5 to 1:3, 1:0.5 to 1:1.5, or 1:0.7 to 1:1.2. Within this range, the charging efficiency and high-temperature lifespan of a battery may be excellent.

For example, in addition to the electrolyte additive, the electrolyte of the present invention may further include additives that are generally be used in electrolytes for the purposes of suppressing side reactions inside a battery, improving the lifespan characteristics of a battery, suppressing battery capacity decay, and improving the discharge capacity of a battery.

As a specific example, the additives may include one or more selected from the group consisting of ethyl propionate (EP), propyl propionate (PP), succinic anhydride, tetravinyl silane, 1,1,2,2-tetrafluoroethyl 2,2,2-trifluoroethyl ether, 1,2-bis((difluorophosphanyl)oxy)ethane, 1,3,6-hexanetricarbonitrile, succinonitrile, 1-ethyl-3-methylimidazolium dicyanamide, trimethoxyboroxine, lithium bis(oxaleto)borate, lithium difluoro(oxalato)borate, tris(trimethylsilyl)borate, lithium tetrafluoroborate, triisopropyl borate, lithium tetrafluoro(oxalato)phosphate, lithium difluoro(bisoxalato)phosphate, diethyl (difluoromethyl)phosphonate, tris(trimethylsilyl)phosphite, tripropargyl phosphate, 2,4,8,10-tetraoxa-3,9-dithiaspiro[5.5]undecane 3,3,9,9-tetraoxide, dimethyl sulfate, ethylene dimethanesulfonate, methylene methyl disulfonate, lithium bis(fluorosulfonyl)imide, 3-fluoro-1,3-propanesultone, ethylene sulfate, 1,3-propylene sulfate, 1,4-butanesultone, sulfolene, biphenyl, cyclohexyl benzene, 4-fluorotoluene, triphenyl phosphate, fluorobenzene, and 2-fluoro-biphenyl.

Among the aforementioned types, the metal phosphate compounds, as a specific example, one or more selected from the group consisting of lithium difluoro(bisoxalato) phosphate, lithium tetrafluorooxalato phosphate, and lithium trioxalato phosphate, are components added to improve the performance of lithium secondary batteries and lithium ion capacitors, suppress internal side reactions of a battery, and improve resistance and lifespan, and may be included in the electrolyte in an amount of 0.3 to 2.5 % by weight, preferably 0.5 to 1.5 % by weight. When the content of the electrolyte additives satisfies the content range, the high-temperature characteristics and cycle characteristics of a battery may be improved.

For example, a total amount of all electrolyte additives used may be 0.1 to 10.1 % by weight, 0.1 to 8.0 % by weight, 0.1 to 7 % by weight, 0.3 to 7 % by weight, 0.5 to 6 % by weight, or 0.5 to 5 % by weight. When the content of the electrolyte additives satisfies the content range, the high-temperature characteristics and cycle characteristics of a battery may be improved.

The above-mentioned additive components are additionally included in the compound represented by Chemical Formula 1. When only the additive components were injected without the compound represented by Chemical Formula 1, the poor improvement effect on long-term lifespan and low resistance was confirmed through the comparative examples described below.

In addition, the present invention provides an electrolyte including the electrolyte additive of the present invention. The electrolyte is an electrolyte of a non-aqueous lithium secondary battery, and includes the electrolyte additive, an organic solvent, and a lithium salt.

For example, the organic solvent may be a carbonate-based organic solvent, and specifically, may be an organic solvent including one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

For example, the organic solvent may be a single solvent or a mixed solvent prepared by mixing two or more solvents. Preferably, a mixed solvent prepared by mixing an organic solvent having a high dielectric constant and high ionic conductivity used to increase the charge/discharge performance of a battery and a low-viscosity organic solvent capable of adjusting the viscosity of a solvent to be suitable for application to the battery may be used.

For example, the organic solvent having a high dielectric constant may include EC and PC, the low-viscosity organic solvent may include EMC, DMC, and DEC, and the organic solvent having a high dielectric constant and the low-viscosity organic solvent is preferably mixed in a volume ratio of 2:8 to 8:2. More specifically, a ternary mixed solvent of EC or PC, EMC, and DEC may be used, and the ratio of EC or PC and EMC and DEC may be 1 : 0.1 to 1 : 2 to 5, 1 : 0.2 to 0.5 : 3 to 5, or 1 : 0.2 to 0.3 : 3 to 4.

When the organic solvent contains moisture, lithium ions in the electrolyte may be hydrolyzed. Accordingly, the amount of moisture in the organic solvent is preferably adjusted to 150 ppm or less, preferably 100 ppm or less.

A compound capable of providing lithium ions used in a lithium secondary battery may be used as the lithium salt without particular limitation. Specifically, the lithium salt may include one or more selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi, preferably LiPF₆.

When the lithium salt is dissolved in an electrolyte, the lithium salt functions as a source of lithium ions in a lithium secondary battery and may promote the movement of lithium ions between a cathode and an anode. Accordingly, the lithium salt is preferably included in a concentration of about 0.6 mol% to 2 mol% in the electrolyte. When the concentration of the lithium salt is less than 0.6 mol%, the conductivity of the electrolyte may be reduced, resulting in poor electrolyte performance. When the concentration of the lithium salt exceeds 2 mol%, the viscosity of the electrolyte may increase, which reduces the mobility of lithium ions. Considering the conductivity of the electrolyte and the mobility of lithium ions as described above, the lithium salt may be included in the electrolyte in an amount of preferably 0.7 mol% to 1.6 mol%, more preferably 0.8 mol% to 1.5 mol%.

For example, the electrolyte additives may be included in the electrolyte in an amount of 0.1 to 10.1 % by weight, 0.1 to 8.0 % by weight, 0.1 to 7 % by weight, 0.3 to 7 % by weight, 0.5 to 6 % by weight, or 0.5 to 5 % by weight. When the content of the electrolyte additives satisfies the content range, the high-temperature characteristics and cycle characteristics of a battery may be improved.

The secondary battery of the present invention includes an anode, a cathode, a separator interposed between the anode and the cathode, and the electrolyte.

For example, the cathode may be prepared by obtaining a composition for forming a cathode active material layer by mixing a cathode active material, a binder, and optionally a conductive agent, and then applying the composition to a cathode current collector such as aluminum foil.

A compound (lithiated intercalation compound) capable of reversible intercalation and deintercalation of lithium may be used as the cathode active material.

For example, as the cathode active material, a conventional lithium nickel manganese cobalt oxide (NCM, LiNiMnCoO₂) cathode active material used in lithium secondary batteries may be used. For example, the cathode active material may be a lithium composite metal oxide represented by a chemical formula of Li[NiₓCo_{y}M_{z}]O₂ (M being Mn and/or Al, 0<x<98, 0<y<35, 0<z<35, x+y+z=100), but the present invention is not limited thereto.

For example, in the chemical formula of Li[NixCoyM_{z}]O₂ representing the lithium composite metal oxide, the variables x, y, and z may be 0.0001<x<98, 0.0001<y<35, and 0.0001<z<35, preferably, 1≤x≤93, 1≤y≤30, and 1≤z≤30, more preferably 5≤x≤91, 3≤y≤25, and 3≤z≤25, still more preferably 80≤x≤91, 3≤y≤25, and 3≤z≤25. Here, x+y+z satisfies 100.

As another example, the lithium composite metal oxide may include one or more selected from the group consisting of LiCoO₂, LiMnO₂, LiMn₂O₄, LiNiO₂, LiNiₓMn₍₁₋ₓ₎O₂ (0<x<1), and LiM1ₓM2_{y}O₂ (0≤x≤1, 0≤y≤1, 0≤x+y≤1, M1 and M2 are each independently one selected from the group consisting of Al, Sr, Mg, and La). In this case, the capacity characteristics and stability of a battery may be increased.

A compound having a coating layer formed on the surface thereof may be used, or the compound and the compound having a coating layer may be mixed and used. The coating layer may include at least one coating element compound selected from the group consisting of an oxide of a coating element, a hydroxide of a coating element, an oxyhydroxide of a coating element, an oxycarbonate of a coating element, and a hydroxycarbonate of a coating element. The compounds forming these coating layers may be amorphous or crystalline.

The coating elements included in the coating layer may include Mg, Al, Co, K, Na, Ca, Si, Ti, V, Sn, Ge, Ga, B, As, Zr, or a mixture thereof. As a coating layer forming process, the compound may be coated by a method (e.g., spray coating, dipping method, etc.) that does not adversely affect the properties of the cathode active material by using these elements. Any coating method may be used, and since the above coating methods are known in the art, a detailed description thereof is omitted.

For example, based on a total weight of the cathode active material, the content of the cathode active material may be 90 % by weight or more or 90 to 98 % by weight.

In one embodiment of the present invention, the cathode active material layer may include a binder and a conductive material. In this case, based on a total weight of the cathode active material, the content of each of the binder and conductive material may be 1 % by weight or more or 1 to 5 % by weight.

The binder plays a role in attaching the cathode active material particles to each other. In addition, the binder plays a role in attaching the cathode active material to the current collector. For example, as the binder, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like may be used.

The conductive material is used to provide conductivity to the electrode, and any material that does not cause chemical changes and is electronically conductive may be used in the battery being constructed. For example, a conductive material including a carbon-based material such as natural graphite, artificial graphite, carbon black, acetylene black, Ketjen black, and carbon fiber; a metal-based material such as metal powder such as copper, nickel, aluminum, and silver or metal fiber; a conductive polymer such as a polyphenylene derivative; or a mixture thereof may be used.

Al may be used as a current collector, but the present invention is not limited thereto.

For example, the anode may be prepared by obtaining a composition for forming an anode active material layer by mixing an anode active material, a binder, and optionally a conductive agent, and then applying the composition to an anode current collector such as copper foil.

The surface of the anode may further include a solid electrolyte interphase(SEI) film.

The anode active material may include a material capable of reversible intercalation and deintercalation of lithium ions, lithium metal, an alloy of lithium metal, a material capable of doping and de-doping lithium, or a transition metal oxide.

Any carbon-based anode active material that is commonly used in lithium ion secondary batteries may be used as a material that may reversibly intercalate/de-intercalate lithium ions.

As a specific example, the anode active material may include carbonaceous materials such as artificial graphite, natural graphite, graphitized carbon fiber, and amorphous carbon. In addition to the carbonaceous materials, a metallic compound capable of alloying with lithium or a composite including a metallic compound and a carbonaceous material may also be used as the anode active material. For example, graphite may be used as the anode active material.

In addition, a metallic lithium thin film may be used as the anode active material. As the anode active material, at least one selected from the group consisting of crystalline carbon, amorphous carbon, carbon composites, lithium metal, and lithium-containing alloys, known to have high stability, may be used.

For example, as the metal capable of alloying with lithium, any one of Si, Al, Sn, Pb, Zn, Bi, In, Mg, Ga, Cd, Si alloy, Sn alloy, and Al alloy may be used.

The material capable of doping and de-doping lithium may include Si, Si-C composites, SiOx(0 < x < 2), Si-Q alloys (Q is an element selected from the group consisting of alkali metals, alkaline earth metals, group 13 elements, group 14 elements, group 15 elements, group 16 elements, transition metals, rare earth elements, and combinations thereof, but not Si.), Sn, SnO₂, Sn-R (R is an element selected from the group consisting of alkali metals, alkaline earth metals, group 13 elements, group 14 elements, group 15 elements, group 16 elements, transition metals, rare earth elements, and combinations thereof, but not Sn), and the like. In addition, a mixture of at least one of these and SiO₂ may also be used.

As the elements Q and R, one selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof may be used.

The transition metal oxides may include vanadium oxide, lithium vanadium oxide, or lithium titanium oxide.

In the anode active material layer, based on a total weight of the anode active material layer, the content of the anode active material may be, for example, 95 % by weight or more or 95 to 99 % by weight.

In the anode active material layer, based on a total weight of the anode active material layer, the content of the binder may be, for example, 1 % by weight or more or 1 to 5 % by weight.

When the conductive material is included, the anode active material may be used in an amount of 90 to 98 % by weight, the binder may be used in an amount of 1 to 5 % by weight, and the conductive material may be used in an amount of 1 to 5 % by weight.

The binder serves to attach anode active material particles to each other. In addition, the binder serves to attach the anode active material to the current collector. The binder may be a water-insoluble binder, a water-soluble binder, or a combination thereof.

The water-insoluble binder may include polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, polyamide-imide, polyimide, or a combination thereof.

The water-soluble binder may include a rubber-based binder or a polymer resin binder.

The rubber-based binder may be selected from styrene-butadiene rubber, acrylated styrene-butadiene rubber (SBR), acrylonitrile-butadiene rubber, acrylic rubber, butyl rubber, fluororubber, and a combination thereof.

The polymer resin binder may be selected from polytetrafluoroethylene, polyethylene, polypropylene, an ethylene propylene copolymer, polyethylene oxide, polyvinyl pyrrolidone, polyepichlorohydrin, polyphosphazene, polyacrylonitrile, polystyrene, an ethylene propylene diene copolymer, polyvinyl pyridine, chlorosulfonated polyethylene, latex, polyester resin, acrylic resin, phenol resin, epoxy resin, polyvinyl alcohol, and a combination thereof.

When the water-soluble binder is used as the anode binder, a cellulose-based compound capable of imparting viscosity may be further included.

For example, as the cellulose-based compound, carboxymethyl cellulose, hydroxypropyl methyl cellulose, methyl cellulose, or a mixture of alkali metal salts thereof may be used.

Na, K, or Li may be used as the alkali metal. For example, based on 100 parts by weight of the anode active material, the content of the thickener may be 0.1 to 5 parts by weight or 0.1 to 3 parts by weight.

The conductive material is used to provide conductivity to the electrode, and any material that does not cause chemical changes and is electronically conductive may be used in the battery being constructed. For example, a conductive material including a carbon-based material such as natural graphite, artificial graphite, carbon black, acetylene black, Ketjen black, and carbon fiber; a metal-based material such as metal powder such as copper, nickel, aluminum, and silver or metal fiber; a conductive polymer such as a polyphenylene derivative; or a mixture thereof may be used.

The current collector may be selected from the group consisting of copper foil, nickel foil, stainless steel foil, titanium foil, nickel foam, copper foam, a polymer substrate coated with a conductive metal, and a combination thereof.

Depending on the type of lithium secondary battery, a separator may be disposed between the cathode and anode. As the separator, polyethylene, polypropylene, polyvinylidene fluoride, or a multilayer film of two or more layers thereof may be used. In addition, mixed multilayer films such as a two-layer separator of polyethylene/polypropylene, a three-layer separator of polyethylene/polypropylene/polyethylene, and a three-layer separator of polypropylene/polyethylene/polypropylene may be used.

In the secondary battery of the present invention, in addition to the usual compounds added to the electrolyte to improve the performance of conventional batteries, the electrolyte additive represented by Chemical Formula 1 is additionally added. In this case, compared to when only conventional electrolyte additives were added, by suppressing the increase in acidity of an electrolyte and inhibiting the elution of transition metal ions from a cathode by effectively scavenging hydrofluoric acid among side reaction products due to the instability of a high-nickel cathode, the battery characteristics such as the battery charge resistance measured by HPPC (Hybrid Pulse Power Characterization), the output characteristics, the capacity recovery characteristics even after long-term storage for more than 60 days at 60 °C or higher, and the lifespan characteristics may be greatly improved.

Specifically, the secondary battery of the present invention may have an HPPC discharge resistance value of 60 mΩ or less, preferably 55 mΩ or less after storage for 60 days at 60 °C, and the increase rate compared to the initial resistance does not exceed 93 %.

In the present disclosure, the HPPC charge(discharge) resistance value may be measured by the method prescribed in the literature "Battery test manual for plug-in hybrid electric vehicles (2010, Idaho National Laboratory for the U.S. Department of Energy)", and is an important index representing the output characteristics of a battery. In addition, the charge (discharge) resistance is a resistance value measured during charging(discharging) of a battery. As the charge (discharge) resistance decreases, energy loss is reduced, thereby increasing a charging speed, and improving the output of a battery. The secondary battery of the present invention has a low HPPC discharge resistance value, and has a high charging speed and excellent output. Due to these advantages, for example, the secondary battery of the present invention is suitable for use as an automobile battery.

The secondary battery may have a recovery capacity maintenance rate of 86 % or more, 86.3 % or more, 86 to 95 %, or 86 to 90 % as measured after storage for 60 days at 60 °C.

In the present disclosure, the recovery capacity represents the capacity retention characteristics of a battery that has been left unattended for a long period of time. The recovery capacity may be obtained by measuring and comparing discharged electric capacity when a battery left for a long time is discharged to a discharge final voltage and discharged electric capacity when the discharged battery is recharged and discharged again to the discharge final voltage. As the recovery capacity increases, the amount of natural discharge due to battery preservation (storage) decreases, which means that a battery may be preserved for a long time. In particular, as the storage temperature of a battery increases, spontaneous discharge rate increases. Thus, recovery capacity at high temperatures is a very important characteristic of automotive batteries. When the electrolyte additive of the present invention is added to an electrolyte for batteries, the recovery capacity is increased up to 11 %, as a specific example, 9 to 11 %, compared to a case of using only a conventional additive, and thus long-term storage is possible with only one charge.

The secondary battery may have a lifespan efficiency of 89 % or more, 89.3 % or more, 89 to 99 %, or 89 to 95 % as measured after storage for 60 days at 60 °C.

The secondary battery may have a thickness increase rate of 6 % or less, 5 % or less, 1 to 5 %, or 3 to 5 % at 60 °C.

When the secondary battery is a high-nickel full cell battery, a resistance increase rate at 60 °C may be 20 % or less, 18 % or less, 1 to 20 %, or 3 to 17 %.

When the secondary battery is an LFP battery, a resistance increase rate at 60 °C may be 100 % or less, 90 % or less, 1 to 90 %, or 3 to 90 %.

Therefore, when the battery of the present invention is used as a battery for automobiles, output dependent on the size of an automobile may be improved. In addition, performance at low and high temperatures associated with climate change and direct exposure to sunlight while driving or parked may be improved. In addition, even when a high-content nickel cathode material is applied for high-capacity expression, by suppressing the increase in acidity of an electrolyte and inhibiting the elution of transition metal ions from a cathode by effectively scavenging hydrofluoric acid among side reaction products due to the instability of a high-nickel cathode, stability may be ensured. Accordingly, the battery of the present invention may exhibit excellent performance as an automobile battery.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### Example 1

As an organic solvent, a carbonate-based mixed solvent having a volume ratio of EC:EMC:DEC of 20:40:40 was used, and 0.5 % by weight of the compound represented by Chemical Formula 1-1 was added to a solution containing LiPF₆ as a lithium salt in a concentration of 1.15 M to prepare an electrolyte for batteries.

### Example 2

As an organic solvent, a carbonate-based mixed solvent having a volume ratio of EC:EMC:DEC of 20:40:40 was used, and 0.5 % by weight of the compound represented by Chemical Formula 1-1 and 0.5 % by weight of fluoroethylene carbonate (FEC) were added to a solution containing LiPF₆ as a lithium salt in a concentration of 1.15 M to prepare an electrolyte for batteries.

### Example 3

As an organic solvent, a carbonate-based mixed solvent having a volume ratio of EC:EMC:DEC of 20:40:40 was used, and 0.5 % by weight of the compound represented by Chemical Formula 1-1 and 1.0 % by weight of lithium difluorophosphate (LDFP) were added to a solution containing LiPF₆ as a lithium salt in a concentration of 1.15 M to prepare an electrolyte for batteries.

### Example 4

As an organic solvent, a carbonate-based mixed solvent having a volume ratio of EC:EMC:DEC of 20:40:40 was used, and 0.5 % by weight of the compound represented by Chemical Formula 1-1 and 1.0 % by weight of vinyl carbonate (VC) were added to a solution containing LiPF₆ as a lithium salt in a concentration of 1.15 M to prepare an electrolyte for batteries.

### Example 5

As an organic solvent, a carbonate-based mixed solvent having a volume ratio of EC:EMC:DEC of 20:40:40 was used, and 0.5 % by weight of the compound represented by Chemical Formula 1-2 was added to a solution containing LiPF₆ as a lithium salt in a concentration of 1.15 M to prepare an electrolyte for batteries.

### Example 6

As an organic solvent, a carbonate-based mixed solvent having a volume ratio of EC:EMC:DEC of 20:40:40 was used, and 0.5 % by weight of the compound represented by Chemical Formula 1-2 and 0.5 % by weight of fluoroethylene carbonate (FEC) were added to a solution containing LiPF₆ as a lithium salt in a concentration of 1.15 M to prepare an electrolyte for batteries.

### Comparative Example 1

As an organic solvent, a carbonate-based mixed solvent having a volume ratio of EC:EMC:DEC of 20:40:40 was used, and 0.5 % by weight of the compound represented by Chemical Formula 2 was added to a solution containing LiPF₆ as a lithium salt in a concentration of 1.15 M to prepare an electrolyte for batteries.

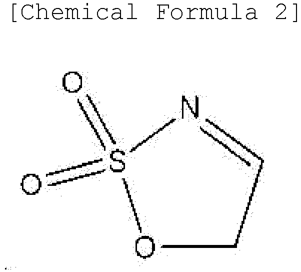

### Comparative Example 2

As an organic solvent, a carbonate-based mixed solvent having a volume ratio of EC:EMC:DEC of 20:40:40 was used, and 0.5 % by weight of fluoroethylene carbonate (FEC) was added to a solution containing LiPF₆ as a lithium salt in a concentration of 1.15 M to prepare an electrolyte for batteries.

### Comparative Example 3

As an organic solvent, a carbonate-based mixed solvent having a volume ratio of EC:EMC:DEC of 20:5:75 was used, and a solution containing LiPF₆ as a lithium salt in a concentration of 1.15 M was used to prepare an electrolyte for batteries. For reference, Comparative Example 3 corresponds to an experiment that did not use any electrolyte additive.

### Comparative Example 4

As an organic solvent, a carbonate-based mixed solvent having a volume ratio of EC:EMC:DEC of 20:40:40 was used, and 0.5 % by weight of lithium difluorophosphate was added to a solution containing LiPF₆ as a lithium salt in a concentration of 1.15 M to prepare an electrolyte for batteries.

### Manufacture of NCM battery

92 % by weight of Li(Ni_{0.8}Co_{0.1}Mn_{0.1})O₂ as a cathode active material, 4 % by weight of carbon black as a conductive agent, and 4 % by weight of polyvinylidene fluoride (PVdF) as a binder were added to N-methyl-2-pyrrolidone (NMP) as a solvent to prepare cathode mixture slurry. The cathode mixture slurry was applied to an aluminum (Al) thin film having a thickness of about 20 µm as a cathode current collector. Then, the thin film was dried, and then subjected to roll press to manufacture a cathode.

96 % by weight of carbon powder as an anode active material, 3 % by weight of PVdF as a binder, and 1 % by weight of carbon black as a conductive agent were added to NMP as a solvent to prepare anode mixture slurry. The anode mixture slurry was applied to a copper (Cu) thin film having a thickness of 10 µm as an anode current collector. Then, the thin film was dried, and then subjected to roll press to manufacture an anode.

A pouch-type battery was manufactured according to a conventional method using the manufactured cathode and anode and a separator composed of three layers of polypropylene/polyethylene/polypropylene (PP/PE/PP). Then, the electrolytes prepared in Examples 1 to 6 and Comparative Examples 1 to 4 were injected into the pouch-type battery to manufacture lithium secondary batteries.

### Test Examples 1 to 9

The performance of the manufactured secondary batteries was evaluated according to the following methods, and the results are shown in Table 1 below.

### [Evaluation of HPPC charge(discharge) resistance]

HPPC charge(discharge) resistance was measured according to the method prescribed in the literature "Battery test manual for plug-in hybrid electric vehicles (2010, Idaho National Laboratory for the U.S. Department of Energy)".

After storing at 60 °C for 60 days, a measurement voltage value, a charge/discharge current value corresponding to C-rate, current change (ΔI), discharge voltage change (ΔV), charge voltage change (ΔV), discharge resistance, and charge resistance were measured. A resistance increase rate was calculated using a slope value obtained from change in current and voltage by briefly flowing charge/discharge current for each C-rate for a certain period of time.

### [Evaluation of high-temperature storage DC-IR, recovery capacity]

According to the charging conditions, charging was performed at a constant current of 0.5 C and a voltage of 4.2 V until charging current became 1/10 C. According to the discharging conditions, after performing charging and discharging by discharging to 3.0 V at a constant current of 0.5 C, discharge capacity was measured.

After charging was performed under the same charging and discharging conditions, the battery was stored at 60 °C for 60 days, and then discharged to a discharge voltage of 3 V under the same condition. Then, the remaining capacity was measured. Table 1 below shows the high-temperature storage DC-IR increase rate, recovery capacity retention rate, and thickness retention rate.

### [Evaluation of high-temperature lifespan]

The secondary battery was charged with constant current at 60 °C at a current of 1 C rate until voltage reached 4.20 V (vs. Li), and then cut off at a current of 0.1 C rate while maintaining 4.20 V in a constant voltage mode. Subsequently, discharge was performed at a constant current of 1 C rate until voltage reached 3.0 V (vs. Li) during discharge (1st cycle). The above cycle was repeated 300 times, and changes in capacity and retention rate were measured.

**[Table 1]**

| Classification | Additives | Initial discharge DC-IR (mΩ) | High-temperature storage DC-IR increase rate (%) | High-temperature storage recovery capacity maintenance rate (%) | Lifespan efficiency (%) | Thickness increase rate (%) |
|---|---|---|---|---|---|---|
| Test Example 1 | Example 1 | 71.0 | 16.5 | 86.9 | 89.66 | 4.7 |
| Test Example 2 | Example 2 | 71.6 | 9.1 | 87.7 | 90.25 | 4.0 |
| Test Example 3 | Example 3 | 70.1 | 8.5 | 88.5 | 90.12 | 3.8 |
| Test Example 4 | Example 4 | 74.5 | 10.5 | 89.3 | 91.27 | 4.2 |
| Test Example 5 | Example 5 | 74.7 | 17.5 | 86.3 | 88.90 | 4.9 |
| Test Example 6 | Example 6 | 72.1 | 10.2 | 86.9 | 89.95 | 4.3 |
| Test Example 7 | Comparative Example 1 | 84.8 | 55.0 | 84.7 | 88.33 | 6.9 |
| Test Example 8 | Comparative Example 2 | 73.5 | 23.2 | 85.2 | 88.53 | 6.2 |
| Test Example 9 | Comparative Example 3 | 77.2 | 37.0 | 82.8 | 87.35 | 8.7 |

As shown in Table 1, For Test Examples 1 to 6 using the electrolyte additives of Examples 1 to 6 according to the present invention, compared to Test Examples 7 to 9 using Comparative Example 1 in which the electrolyte additive is replaced with an electrolyte additive component having a structure similar to that of the Chemical Formula 1-1, Comparative Example 2 in which the electrolyte additive is replaced with a conventional carbonate component, and Comparative Example 3 without using the electrolyte additive, in the NCM battery, the initial discharge resistance, resistance increase rate, high-temperature recovery capacity, thickness increase rate, and high-temperature lifespan capacity efficiency were all improved.

In particular, a significant difference was observed in the resistance increase rate of the battery before and after high-temperature storage. Test Examples 1 to 6 using Examples 1 to 6 according to the present invention showed values of 8.5 to 16.5 %, which is a significant improvement over 23.2 to 55.0 % calculated in Test Examples 7 to 9 using Comparative Examples 1 to 3.

In addition, as a result of measuring the thickness change of the battery before and after high-temperature storage, it was confirmed that the electrolyte additive of the present invention has the effect of reducing gas generation by significantly suppressing the oxidation/reduction decomposition of an electrolyte. In fact, as shown in Table 1 above, the electrolyte additive of the present invention provided a thickness increase rate of 5 % or less at 60 °C.

### Manufacture of LFP battery

92 % by weight of Li(Ni_{0.8}Co_{0.1}Mn_{0.1})O₂ as a cathode active material, 4 % by weight of carbon black as a conductive agent, and 4 % by weight of polyvinylidene fluoride (PVdF) as a binder were added to N-methyl-2-pyrrolidone (NMP) as a solvent to prepare cathode mixture slurry. The cathode mixture slurry was applied to an aluminum (Al) thin film having a thickness of about 20 µm as a cathode current collector. Then, the thin film was dried, and then subjected to roll press to manufacture a cathode.

96 % by weight of carbon powder as an anode active material, 3 % by weight of PVdF as a binder, and 1 % by weight of carbon black as a conductive agent were added to NMP as a solvent to prepare anode mixture slurry. The anode mixture slurry was applied to a copper (Cu) thin film having a thickness of 10 µm as an anode current collector. Then, the thin film was dried, and then subjected to roll press to manufacture an anode.

A pouch-type battery was manufactured according to a conventional method using the manufactured cathode and anode and a separation membrane composed of three layers of polypropylene/polyethylene/polypropylene (PP/PE/PP). Then, the electrolytes prepared in Example 1 and Comparative Examples 1 and 4 were injected into the pouch-type battery to manufacture lithium secondary batteries.

### Test Examples 10 to 12

The performance of the manufactured secondary batteries was evaluated according to the following methods, and the results are shown in Table 2 below.

### [Evaluation of HPPC charge(discharge) resistance]

HPPC charge(discharge) resistance was measured according to the method prescribed in the literature "Battery test manual for plug-in hybrid electric vehicles (2010, Idaho National Laboratory for the U.S. Department of Energy)".

After storing at 60 °C for 60 days, a measurement voltage value, a charge/discharge current value corresponding to C-rate, current change (ΔI), discharge voltage change (ΔV), charge voltage change (ΔV), discharge resistance, and charge resistance were measured. A resistance increase rate was calculated using a slope value obtained from change in current and voltage by briefly flowing charge/discharge current for each C-rate for a certain period of time.

### [Evaluation of high-temperature recovery capacity]

According to the charging conditions, charging was performed at a constant current of 0.5 C and a voltage of 4.2 V until charging current became 1/10 C. According to the discharging conditions, after performing charging and discharging by discharging to 3.0 V at a constant current of 0.5 C, discharge capacity was measured.

After charging under the same charge/discharge conditions and storing at 60 °C for 60 days, the battery was discharged to a discharge voltage of 3 V under the same conditions, and the change in residual capacity was measured, which is shown as high-temperature recovery capacity in Table 1 below.

### [Evaluation of high-temperature lifespan]

The secondary battery was charged with constant current at 60 °C at a current of 1 C rate until voltage reached 4.20 V (vs. Li), and then cut off at a current of 0.1 C rate while maintaining 4.20 V in a constant voltage mode. Subsequently, discharge was performed at a constant current of 1 C rate until voltage reached 3.0 V (vs. Li) during discharge (1st cycle). The above cycle was repeated 300 times, the battery was stored for 60 days, and changes in capacity and retention rate were measured.

**[Table 2]**

| Classification | Additives | Initial discharge DC-IR (mΩ) | High-temperature storage DC-IR increase rate (%) | High-temperature storage recovery capacity maintenance rate (%) | Lifespan efficiency (%) |
|---|---|---|---|---|---|
| Test Example 10 | Example 1 | 117.4 | 86.9 | 89.0 | 89.3 |
| Test Example 11 | Comparative Example 1 | 130.5 | 120.1 | 84.2 | 85.1 |
| Test Example 12 | Comparative Example 4 | 120.5 | 109.6 | 86.9 | 87.5 |

As shown in Table 2, in the case of Test Example 10 using the electrolyte additive of Example 1 according to the present invention, compared to Test Examples 11 and 12 using Comparative Example 1 in which the electrolyte additive is replaced with an electrolyte additive component having a structure similar to that of Chemical Formula 1-1 and Comparative Example 4 in which the electrolyte additive is replaced with the conventional lithium difluorophosphate (LDFP) component, one or more of properties such as initial discharge resistance, resistance increase rate, high-temperature recovery capacity, thickness increase rate, and high-temperature lifespan was equivalent or improved.

In particular, a significant difference was observed in the resistance increase rate of the battery before and after high-temperature storage. Test Example 10 using Example 1 according to the present invention showed a value of 86.9 %, which is a significant improvement over 109.6 to 120.1 % calculated in Test Examples 11 and 12 using Comparative Examples 1 and 4.

In addition, improvement in high-temperature recovery capacity was shown. In the case of the electrolyte additive structure used in the present invention, an effective protective film was formed on the cathode and anode, and side reactions between the electrolyte and electrode were suppressed, compared to the experiment using a similar structure in Comparative Example 1 or the experiment using a different structure in Comparative Example 4. These results show excellent recovery capacity and capacity retention characteristics.

For reference, the recovery capacity is related to the reversibility of Li ions, and is known that an increase in irreversible Li ions, such as transition metal dissolution from the cathode, deposition of the dissolved metal ions on the anode surface, or side reactions at the interface between the cathode and the anode, leads to a decrease in capacity.

As shown in Table 2, the electrolyte additive of the present invention shows a recovery capacity maintenance rate of 89.0 % at 60 °C, which is a significant improvement over 84.2 to 96.9 % in Comparative Example 1 or 4.

Furthermore, as a result of measuring lifespan efficiency, Example 1 according to the present invention shows a value of 89.3 %, which is a significant improvement over 85.1 to 87.5 % calculated in Comparative Example 1 or 4.

As a result, in the case of the secondary batteries of Examples 1 and 5, which used the electrolyte additive of the present invention alone, and Examples 1, 2, 3, 4, and 6, which used the electrolyte additive appropriately in combination with the conventional electrolyte additive, compared to Comparative Example 1 using only a structure similar with the electrolyte additive, Comparative Examples 2 and 4 using only the conventional electrolyte additive, and Comparative Example 3 without using the electrolyte additive and the conventional electrolyte additive, it was found that the final finished composition had excellent discharge efficiency in terms of output and lifespan performance.

Therefore, when applying the electrolyte additive according to the examples of the present invention and the electrolyte containing the electrolyte additive to a secondary battery, gas generation may be reduced by suppressing side reactions inside the battery. In addition, even when long-term storage is performed at high temperatures, charge resistance, discharge resistance, output, recovery capacity, and lifespan efficiency may be improved. Thus, the electrolyte may be suitable for a secondary battery for automobiles, in particular, a high-nickel full cell battery with a basic capacity of 0.1 to 100 Ah, an LFP battery with a basic capacity of 0.1 to 100 Ah, a lithium-manganese-rich (LMR) battery with a basic capacity of 0.1 to 100 Ah, or a cobalt-free battery with a basic capacity of 0.1 to 100 Ah.

## Claims

1. An electrolyte additive **characterized by** being a compound represented by Chemical Formula 1 below. 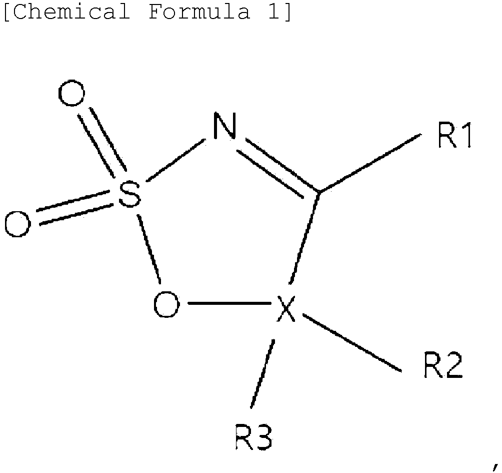 wherein a line represents a bond; unless a separate element is indicated, carbon is located at a point where bonds intersect; X is carbon (C), phosphorus (P), nitrogen (N), oxygen (O), or sulfur (S); R1 is F, Cl, Br, I, a C1-C3 alkyl group, a vinyl group, an allyl group, a propargyl group, a phenyl group, or a carboxyl group; and R2 and R3 are independently H, F, Cl, Br, I, a C1-C3 alkyl group, a vinyl group, an allyl group, a propargyl group, a phenyl group, or a carboxyl group.

2. The electrolyte additive according to claim 1, wherein the compound represented by Chemical Formula 1 comprises compounds represented by Chemical Formulas 1-1 to 1-7 below.

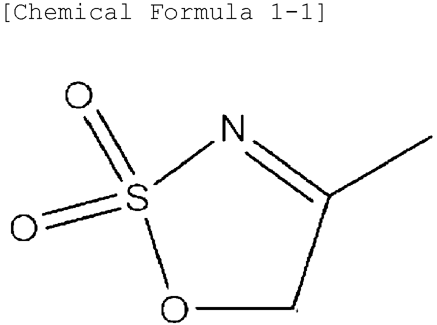

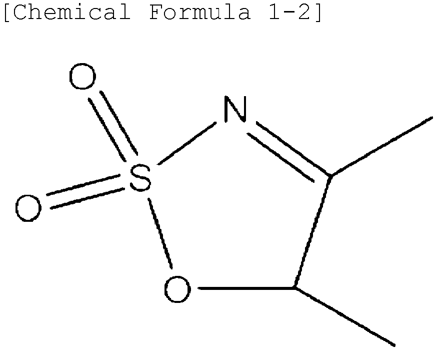

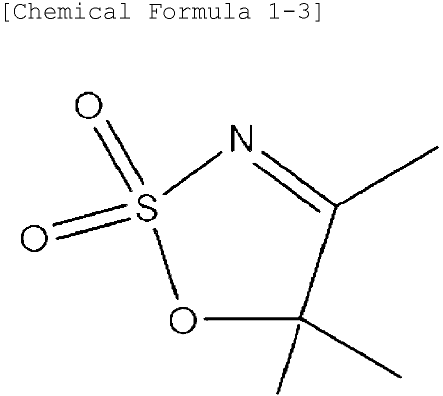

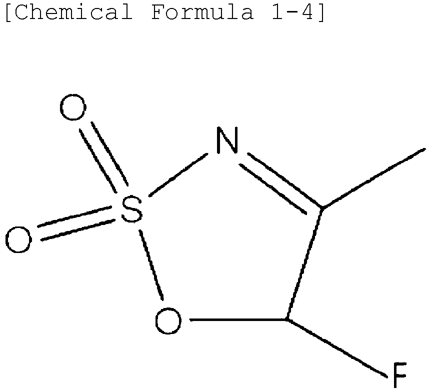

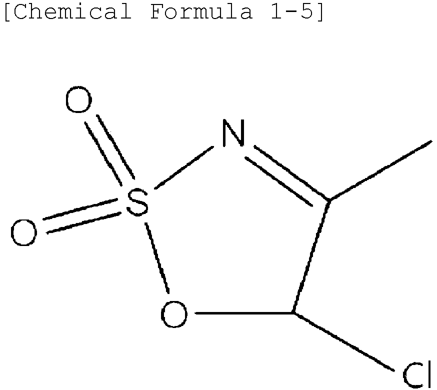

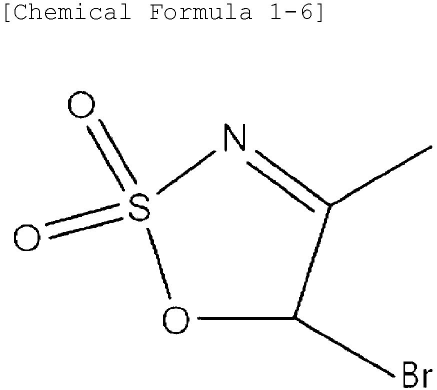

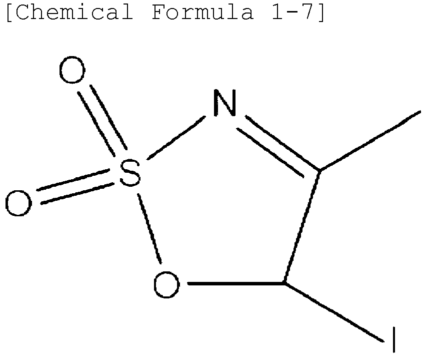

3. An electrolyte additive comprising a compound represented by Chemical Formula 1 below; and one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile. 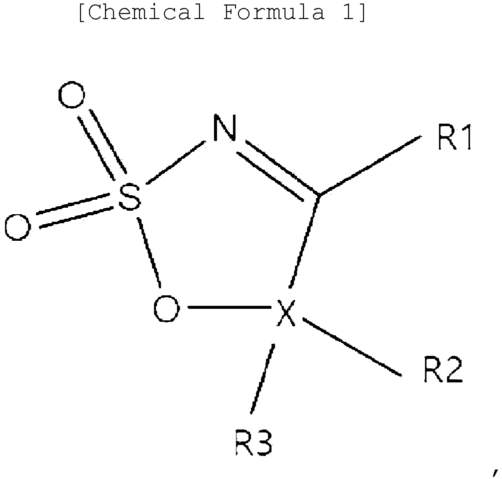 wherein a line represents a bond; unless a separate element is indicated, carbon is located at a point where bonds intersect; X is carbon (C), phosphorus (P), nitrogen (N), oxygen (O), or sulfur (S); R1 is F, Cl, Br, I, a C1-C3 alkyl group, a vinyl group, an allyl group, a propargyl group, a phenyl group, or a carboxyl group; and R2 and R3 are independently H, F, Cl, Br, I, a C1-C3 alkyl group, a vinyl group, an allyl group, a propargyl group, a phenyl group, or a carboxyl group.

4. The electrolyte additive according to claim 3, wherein the compound represented by Chemical Formula 1; and the one or more compounds selected from the group consisting of vinylene carbonate, fluoroethylene carbonate, lithium difluorophosphate, lithium difluorophosphate, 1-propene-1,3-sultone, 1,3-propanesultone, ethylene sulfate, adiponitrile, and succinonitrile are comprised in a weight ratio of 1:0.2 to 1:3.

5. An electrolyte comprising an organic solvent, lithium salt, and an electrolyte additive,
wherein the electrolyte additive comprises the electrolyte additive according to claim 1.

6. The electrolyte according to claim 5, wherein the organic solvent comprises one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

7. The electrolyte according to claim 5, wherein the lithium salt comprises one or more selected from the group consisting of LiPF₆, LiF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi.

8. A secondary battery comprising an anode, a cathode, a separation membrane interposed between the anode and the cathode, and an electrolyte,
wherein the electrolyte is the electrolyte according to claim 5.

9. The secondary battery according to claim 8, wherein the secondary battery has a recovery capacity maintenance rate of 86 % or more after storage for 60 days at 60 °C.

10. The secondary battery according to claim 8, wherein the secondary battery has a lifespan efficiency of 89 % or more after storage for 60 days at 60 °C.

11. The secondary battery according to claim 8, wherein the secondary battery has a thickness increase rate of 6 % or less after storage for 60 days at 60 °C.

12. The secondary battery according to claim 8, wherein the secondary battery is a battery for automobiles.

13. The secondary battery according to claim 8, wherein, when the secondary battery is a high-nickel full cell battery, the secondary battery has a resistance increase rate of 20 % or less at 60 °C.

14. The secondary battery according to claim 8, wherein, when the secondary battery is a lithium iron phosphate battery, the secondary battery has a resistance increase rate of 100 % or less at 60 °C.
